# EUROPÄISCHE PATENTSCHRIFT

(11) **EP 1 012 504 B1**
(45) Veröffentlichungstag und Bekanntmachung des Hinweises auf die Patenterteilung: **19.12.2001**
(21) Anmeldenummer: 98951370.0
(22) Anmeldetag: 09.09.1998
(51) Int. Cl.: F23J 13/02, F16L 9/127, B29B 7/00, B29B 17/00, B29C 47/00, B29C 49/00

(54) **VERFAHREN UND VORRICHTUNG ZUM HERSTELLEN VON KUNSTSTOFFKÖRPERN**
METHOD AND APPARATUS FOR MANUFACTURE OF PLASTIC BODIES
PROCEDE ET APPAREIL POUR LA FABRICATION DE CORPS PLASTIQUES

(30) Priorität: 10.09.1997 DE 19739630; 19.11.1997 DE 19751051
(43) Veröffentlichungstag der Anmeldung: 28.06.2000
(73) Patentinhaber: Wunsch, Horst, CH-8597 Landschlacht (CH)
(72) Erfinder: Wunsch, Horst, CH-8597 Landschlacht (CH)
(74) Vertreter: Behrmann, Niels, Dipl.-Ing.
(86) Internationale Anmeldenummer: EP9805739
(87) Internationale Veröffentlichungsnummer: WO9913271

(56) Entgegenhaltungen:
- WO-A-95/12784
- CH-A- 686 082
- US-A- 4 526 831
- PATENT ABSTRACTS OF JAPAN vol. 012, no. 186 (C-500), 31. Mai 1988 & JP 62 290750 A (MITSUBISHI RAYON CO LTD), 17. Dezember 1987

## Beschreibung

Ein Verfahren zum Herstellen von bevorzugt zylindrischen oder rohrförmigen Kunststoffkörpern, insbesondere Kaminrohren, ferner eine Vorrichtung zur Ausführung des Herstellungsverfahrens zum Herstellen eines langestreckten Kunststoffkörpers sowie eine Verwendung des Kunststoffmaterials PET der nach dem Verfahren hergestellt ist.

Der Anmelder entwickelt und vertreibt seit etwa 10 Jahren sehr erfolgreich Kunststoffkamine, die mittels des Werkstoffes PVDF realisiert sind. Nicht nur erreicht dieses zähe und hoch temperaturbeständige Material die für Abgastemperaturen kritische Grenze von 160°, auch ist dieser Werkstoff hinreichend beständig gegen insbesondere in Naßkaminen auftretendes Kondensat und es ist in Brandklasse V0 einzustufen.

Im Ergebnis hat sich ein derartiger Kunststoffkamin als ernsthafte Alternative zu traditionellen Kaminrohren aus Edelstahl etabliert.

Nachteilig an derartigen, bekannten Kunststoffrohren sind jedoch die durch das teuere Material und das aufwendige Herstellungsverfahren bedingten, hohen Herstellkosten; gegenüber den Edelstahlrohren ist dadurch ein PVDF-Kaminrohr nur bedingt konkurrenzfähig.

Zwar wurden verschiedentlich Versuche angestellt, alternative Kunststoffmaterialien zu finden, so wurden etwa PP oder andere Thermoplaste als Rohstoffe eingesetzt. Insbesondere für den beabsichtigten, anspruchsvollen Anwendungszweck im Kaminbau haben sich jedoch derartige Produkte weder als ausreichend temperaturfest, noch als den sonstigen Bedingungen gewachsen erwiesen.

Aus Patent Abstracts of Japan, Vol. 012, No. 186 (C-500), 31.05.1998 (Publications-No. 62290750) ist eine tubuläre Gasleitung bekannt, die als Formkörper aus einem PET-Kunststoffmaterial hergestellt ist, das in kristalliner Form vorliegt.

Ferner ist aus CH-A-686 082 ein Kunststoffformkörper bekannt, der aus einem Ausgangsmaterial hergestellt ist, das PET-Stücke aus zerkleinerten PET-Flaschen aufweist.

Schließlich ist aus US-4,526,831 die Verwendung eines PET-basierten Kunststoffmaterials in kristallinem Zustand zum Herstellen von Karosserieteilen, Felgen und anderen Elementen im Fahrzeugbau bekannt.

Aufgabe der vorliegenden Erfindung ist es daher, insbesondere rohrförmige Kunststoffkörper zu schaffen, welches gegenüber einem PVDF-Kaminrohr leichter herzustellen ist, einen weniger aufwendigen Rohstoff benötigt und hinsichtlich der mechanischen und physikalischen Eigenschaften mindestens dessen Leistung erreicht. Ferner ist ein Herstellungsverfahren für Kunststoffkörpern zu schaffen sowie eine Vorrichtung, die diese Herstellung ermöglicht, und es sind weitere Anwendungsfelder für den aufgabengemäß zu schaffenden Werkstoff zu finden.

Die Aufgabe wird durch das Verfahren mit den Merkmalen des Patentanspruches 1, die Vorrichtung mit den Merkmalen des Patentanspruches 10 sowie die Verwendung nach den Patentansprüchen 16, 18, 19 gelöst.

Vorteilhaft ermöglicht das nach dem Verfahren nach Anspruch 2 hergestellte, kristalline PET herausragende, mechanische Eigenschaften und ist insbesondere den Umgebungsbedingungen in einem Kamin herausragend gewachsen; darüber hinaus steht PET als Rohstoff, etwa aus Getränkeflaschen, in großer Menge zu Verfügung, ohne daß bislang etwa ein sinnvolles Verfahren zur Nutzung dieses recyklierten Rohstoffes bestanden hätte.

Wesentlich ist, daß das Kaminrohr das PET-Material (Polyethylenterephthalat, auch als PETP abgekürzt) in kristallinem Zustand enthält. Während etwa die als Ausgangsprodukt heranzuziehenden Kunststofflaschen das PETP in amorphem, durchsichtigem Zustand aufweisen, ist es zum Erreichen der erwünschten, vorteilhaften hohen mechanischen Stabilität, Zähigkeit und Temperaturfestigkeit notwendig, das PET in kristallinem Zustand zu bringen; dies wird insbesondere durch die langsame Abkühlung des hergestellten Werkstückes erreicht (im Gegensatz dazu werden etwa die PET-Flaschen in der Massenherstellung durch ein Spritz- und Blasverfahren als Spritzgußteile hergestellt und nach Recken durch Luftzufuhr in einer gekühlten, kalten Form ausgeformt, so daß amorphes, transparentes -- und weiches -- Material entsteht).

Als "kristallin" im Sinne der vorliegenden Erfindung ist insbesondere auch ein (PET) Werkstoff zu verstehen, der nicht vollständig in kristallinem Zustand ist, sondern etwa nur teilweise. Eine solche teilkristalline Form soll auch als "kristallin" im Sinne der vorliegenden Erfindung angesehen werden, sobald gegenüber einem amorphen Zustand vorteilhafte Festigkeitseigenschaften erreicht werden können.

Wesentlich ist aber auch das durch Abkühlung erzeugte, im Direktrecycling unter Umgehung der Granulatherstellung hergestellte transparente PET für Einsatzgebiete ohne Temperaturbelastung, wie z. B. Kabelschutzrohre, Trainagerohre oder Kaminrohre für modernste Brennwertkessel, wobei bei diesen Heizungsanlagen Abgastemperaturen unter 100° C zu einer Temperaturbelastung von max. 40 - 50° C führen. Amorphes PET kann mit wesentlich höheren Abzugsgeschwindigkeiten produziert werden, z. B. mit 10 - 20m/ min. Es erfordert kein zusätzliches Warmhalten und verbilligt die Herstellung dieser einfachen dünnen Rohre um über 60 %.

Darüber hinaus wird durch die vorliegende Erfindung in vorteilhafterweise eine der Haupthürden überwunden, die bislang vor einer großtechnisch sinnvollen Weiter- bzw. Wiederverwendung von rezykliertem PET-Material stand: PET ist hygroskopisch und nimmt aus der Luft etwa 0,5 % Wasser auf. Dieser Feuchtigkeitsgehalt ist ein zentrales Problem bei der Verarbeitung und der eigentliche Grund dafür, warum PET bislang nur als Originalmaterial für Faserwerkstoff ("Trevira" der Firma Hoechst) und für die diskutierten Getränkeflaschen großtechnisch zum Einsatz kommt; so führt nämlich eine Verarbeitung von nicht gesondert getrocknetem PET, das möglicherweise auch nur Spuren von Feuchtigkeit enthält, zu einer als thermische Hydrolyse bezeichneten chemischen Reaktion, die die Polymerketten des PET völlig zerstört und den polymeren Stoff in eine unbrauchbare, dünnflüssige, niedrigviskose, monomere Masse verwandelt. Daher ist bislang die Verarbeitung von PET, beispielsweise als Granulat, nur durch langwierige, aufwendige und teure Vortrocknung sowie durch Trockenhalten in der Verpackung bis zur Verarbeitung möglich gewesen. Insbesondere jedoch für eine einfache, preiswerte und flexible Verarbeitung stand dieses Material bislang nicht zur Verfügung, umso weniger für das Herstellen mechanisch zäher und belastbarer Formkörper.

Als Formkörper ist jeglicher Körper zu verstehen, der durch ein geeignetes Kunststoff-Formgebungsverfahren hergestellt werden kann, hierzu gehören besonders bevorzugt etwa das Extrudieren, das Spritzgießen oder Blasformen.

Darüber hinaus ist als von der Erfindung mitumfaßt das Herstellen von Profil- oder Stabelementen anzusehen, die nicht rohrförmig hergestellt sind, jedoch in demselben Maße die besonderen, vorteilhaften mechanischen Wirkungen des verwendeten, kristallinen PET-Werkstoffes ausnutzen können.

Unabhängiger Schutz im Rahmen der Erfindung wird beansprucht für eine Verwendung eines Kunststoffkörpers als Kunststoffrohr, insbesondere ein Kaminrohr, welches unter Verwendung des Werkstoffes PET hergestellt ist, und wobei es nicht entscheidend ist, daß dieses in kristallinem Zustand vorliegt. Vielmehr ist hier erfindungsgemäß beansprucht, daß das Rohr unter Einsatz von zerkleinerten PET-Flaschen hergestellt ist, die durch nachfolgendes Kneten mit der Möglichkeit des Entweichens von Restfeuchte in Dampfform gefertigt wurden.

Dieser Aspekt der Erfindung ermöglicht es, daß durch Abkühlung unter Umgehung der Granulatherstellung im Direktrecykling erzeugte, auch amorphe PET für Einsatzgebiete ohne höhere Temperacurbelastung zu nutzen; hierzu zählen etwa Kabelschutzrohre, Drainagerohre oder Kaminrohre für modernste Brennwertkessel, bei denen Abgastemperaturen von kleiner als 100°C zu einer Temperaturbelastung von max. etwa 40 bis 50°C führen. Beispielsweise kann im Rahmen der Erfindung verwendetes amorphes PET mit wesentlich höheren Produktionsgeschwindigkeiten eingesetzt werden, bei der Rohherstellung beispielsweise mit 10 bis 20 m/min. Durch das dann nicht notwendige, langsame Abkühlen, wie es etwa zum Erreichen des kristallinen Zustandes notwendig wäre, ist darüber hinaus eine wesentliche Vereinfachung des Herstellungsprozesses zu erwarten, der etwa bei einfachen Rohren bis zu etwa 60 % Effizienzsteigerung verspricht.

Zusätzlich Schutz wird beansprucht für eine Verwendung des in der vorerwähnten Weise hergestellten, PET für Anwendungen im Bau-, Wasser- oder Elektrobereich. Hierzu gehören bevorzugt etwa Regenfallrohre, Regenrinnen od.dgl., wie auch Kabelschutzrohre. Ferner wären typische Anwendungsgebiete für das erfindungsgemäß herzustellende Material Fensterrahmen bzw. Fensterprofile (kristalline PET wäre ein besonders günstiges Hart-PVC-Substitut), sowie Dachziegeln od.dgl. Beläge.

Ferner wäre ein zusätzlicher Anwendungsbereich der Fahrzeugbau bzw. die KFZ-Technik. Hier ließe sich das zähe, belastbare kristalline PET-Material etwa in besonders geeigneter Weise für Karosserieteile von KFZ verwenden, wie beispielsweise Kotflügel oder Türen, oder aber für Felgen od.dgl. mechanisch beanspruchte, bislang primär aus Blech oder Aluminium hergestellten Baugruppen.

Ein weiteres, im Rahmen der Erfindung beanspruchtes Verwendungsgebiet wäre der Sport- bzw. Freizeitbereich; so könnte sich das belastbare, zähe PET in kristallinem Zustand beispielsweise als Material zur Herstellung von Lagern für Rollerblades od.dgl. Sportgeräte eignen.

Vorteilhafte Weiterbildungen der Erfindung sind in den übrigen Unteransprüchen beschrieben.

Besonders bevorzugt ist es, kristallinen PET-Material geeignete Füllstoffe zuzusetzen. Diese dienen, etwa im Falle von Glasfasern oder anderen stabilitätserhöhenden Fasern, zur mechanischen Versteifung und weiteren Verbesserung der Festigkeitseigenschaften der hergestellten Rohre, Vollstäbe oder Profile.

Darüber hinaus wirken diese oder andere Füllstoffe jedoch auch als Kristallisationsbeschleuniger, die in besonders günstiger Weise die Bildung des erfindungsgemäß vorteilhaften, kristallinen Zustandes des PET-Werkstoffes fördern.

Durch die nachgewiesenen, besonders vorteilhaften mechanischen Eigenschaften sowie die durch den günstig beschaffbaren, bislang nur schwer recyklierfähigen Werkstoff PET ist somit erfindungsgemäß ein Weg aufgezeigt worden, wie potentiell ökologisch problematische Werkstoffe einer sinnvollen, technisch überaus leistungsfähigen und vorteilhaften Verwendung zugeführt werden können.

Vorteilhaft ist insbesondere auch bei verwendetem amorphem PET, daß dieses Material unter Wärmeeinwirkung, etwa beim Einsatz als Kaminrohr, seine Gefügestruktur - graduell - hin zum zäheren kristallinen PET ändert.

Eine wesentliche, erfindungsgemäße Weiterbildung liegt darin, das nach Anspruch 2 hergestellte und verwendete kristalline PET durch Schäumen, etwa mit Hilfe eines Schaummittels, zu verarbeiten, woraufhin dann Werkstücke entstehen, die -- bei unwesentlich verminderter, mechanischer Stabilität -- ein weitaus geringeres spezifisches Gewicht aufweisen. Darüber hinaus weisen eingesetzte Schaummittel den vorteilhaften Effekt auf, daß durch das verwendete, gasförmige Schaummittel eine Abkühlung eines geformten Produktes verzögert werden würde, mit der Wirkung, daß eine Entstehung des kristallinen Zustands im Material weiter erleichtert wird. Beispielhaft sei zur Verarbeitung auf die sog. Integralschaumspritz-Technik verwiesen.

Eine weitere vorteilhafte Weiterbildung liegt im Zusetzen eines Gleitmittels zu dem PET vor einem Verformen in eine endgültige Produktform; der Zusatz des Gleitmittels im Rahmen der vorliegenden Erfindung eignet sich dabei insbesondere für eine Verarbeitung mittels eines Spritzgießverfahrens.

Da nämlich PET als generell langkettiges Polymer vorliegt, ist gerade beim Spritzgießen keine beliebig hohe Detailauflösung durch das Fließverhalten des Materials zu erreichen. Durch Hinzusetzen eines geeigneten Additivs zur flüssigen Mischung jedoch, wobei als derartiges Gleitmittel Paraffine, Stearine, Wachse od.dgl. geeignet sind, kann durch die damit erreichten Benetzungswirkung die Reibung sowohl zwischen den einzelnen Polymeren (Polymerketten) bzw. zwischen diesen und den Formdüsen deutlich verringert werden, so daß insbesondere für Verarbeitungsverfahren des Spritzgießens od.dgl. die Verarbeitbarkeit deutlich verbessert wird.

Geeignet ist ein Zusetzen eines solchen Gleitmittel-Additivs, beispielsweise als Natriummontanat, mit 0,1 bis 3,0 Gew.-% zum flüssigen PET, weiter bevorzugt zwischen 0,2 und 0,5 Gew.-%.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1:: ein schematisches Funktionsschaubild einer bevorzugten Ausführungsform der erfindungsgemäßen Vorrichtung zum Herstellen von Kaminrohren, und zwar das Dosier-, Misch-, das Austrags- und das Extrusionsaggregat;
- Fig. 2:: der Anlage in Fig. 1 nachgeschaltete Aggregate zum Formen des Kaminrohres sowie zum nachgeschalteten, gesteuerten Abkühlen eines hergestellten Rohres;
- Fig. 3:: ein Flußdiagramm mit den wesentlichen Verfahrensschritten des erfindungsgemäßen Herstellungsverfahrens;
- Fig. 4:: Meßdiagramme betreffend die Vicat-Härte des PET-Werkstoffes; und
- Fig. 5 bis 7:: Beispiele von erfindungsgemäß hergestellten Rohren.

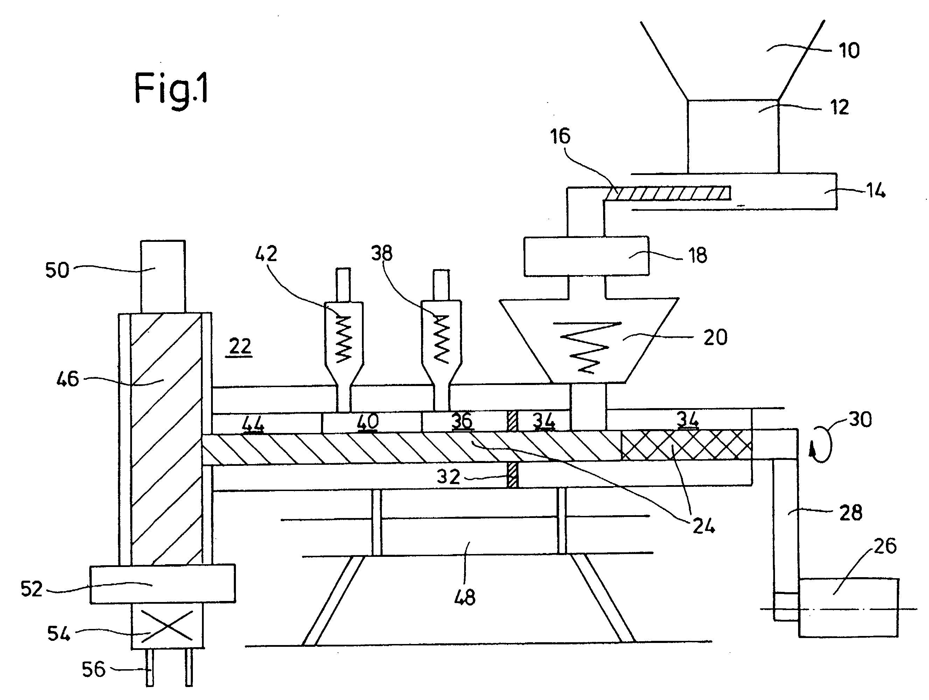

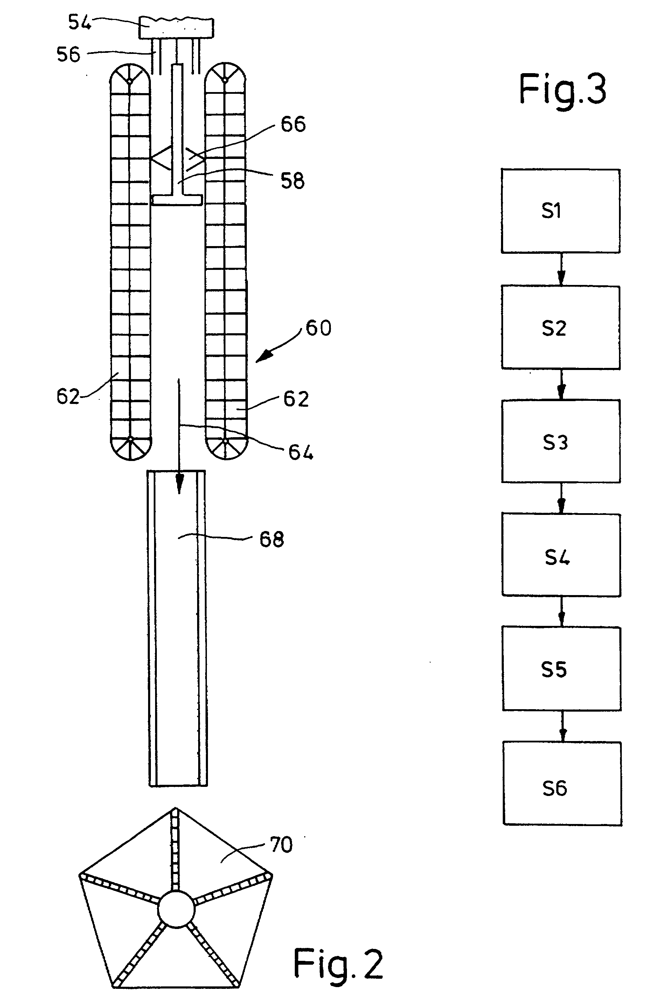

Die in den Fig. 1 und 2 gezeigte Anlage eignet sich dazu, erfindungsgemäße Kaminrohre bzw. Kaminrohrmodule aus PET (Polyethylenterephthalat, auch als PETP abgekürzt) herzustellen. Derartige Kaminrohre weisen üblicherweise eine Rohrlänge zwischen einem und fünf Metern auf und besitzen gängige Außendurchmesser zwischen 75 und 250 mm oder mehr. Üblicherweise sind derartige Rohre zudem mit einem einstückig ansetzenden Verbindungsmuffenabschnitt versehen.

Derartige Abgas- bzw. Kaminrohrmodule aus PET werden erfindungsgemäß aus PET-Ausgangsmaterial, beispielsweise gemahlenen PET-Getränkeflaschen hergestellt, welches als sehr preisgünstiger, rezyclierter Massenrohstoff bereits zerkleinert und gereinigt im Handel erhältlich ist. Dieses Material, welches in handelsüblicher Flockenform -- Kantenlängen der Flocken zwischen etwa 2 und 6 mm -- erhältlich ist, wird vor einer konkreten Verwendung im erfindungsgemäßen Verfahren bzw. zum Herstellen der erfindungsgemäßen Rohre auf etwa 2 bis 10 % der ursprünglichen Körnung feinzermahlen, und dieses Mahlgut wird dann als Ausgangsstoff dem in der Fig. 1 gezeigten Aufgabe- bzw. Materialtrichter 10 der gezeigten Anlage zugeführt. Über eine Dosierklappe 12 und eine nachgeschaltete Differential-Dosierwaage 14 wird das Aufgabegut dann mittels einer Austragschnecke 16 in geeignet dosierter Form über eine (elektrisch wirkende) Metallabscheideeinheit 18 einem Zuführtrichter 20 eines für die gezeigte Anlage wesentlichen Buss-Ko-Kneters 22 zugewogen.

Durch weiter gezieltes Zuwiegen pulverförmiger trockener Zuschlagstoffe über eine weitere Differential - Dosierwaage zusammen mit dem PET - Mahlgut in den Trichter 20 zur Zone 34 kann man die Feuchtigkeit in dem aufzuschliessenden PET - Gemisch prozessual verringern, was der Verhinderung der thermischen Hydrolyse dienen kann, z. B. 20 % Glimmer in Zone 34 und 20 % Glimmer über 38 in Zone 36.

Während der Metallabscheider 18 vorgesehen ist, um etwaige metallische Reste aus der Beschickungsmasse zu entfernen, ermöglichen es die geeignet einstellbaren Dosierwaagen, der Anlage gemäß der eingestellten Prozeßparameter jeweils eine optimale Menge der gemahlenen PET-Flocken und Zuschläge zuzuführen.

Die Kneteinheit 22 weist als zentrales Mischelement eine (in der Fig. 1 in horizontaler Richtung) axial pendelnde Schnecke 24 auf, die über einen Antriebsmotor 26 sowie eine Antriebskette 28 in Drehrichtung gemäß Pfeil 30 angetrieben wird; während dieser Drehbewegung führt die Pendelschnecke 24 die beschriebene, axiale Pendelbewegung aus.

Der die Pendelschnecke 24 umgebene, innere Mischbereich des Kneters 24 weist umfangsseitig sich in den Innenraum erstreckende (in der Fig. nicht näher gezeigte) Zähne bzw. Führungsstücke auf, die über geeignet in der Schnecke vorgesehene Schlitze mit dieser berührungslos zusammenwirken und für den gewünschten Kneteffekt sorgen. Entlang der im gezeigten Ausführungsbeispiel etwa 1 Meter langen Schnecke läßt sich zudem der Innenbereich in verschiedenen Knet-bzw. Mischzonen unterteilen: So wird unterhalb des Zuführtrichters 20, nach links begrenzt durch einen Stauring 32 mit Spiralnuten, eine Einzugszone 34 geschaffen, die eine (nicht gezeigte) umlaufende Wasserkühlung besizt. An den Stauring schließt sich linksseitig eine Mischzone 36 an, wobei im Bereich der Mischzone 36 über ein erstes Stopfwerk 38 als zusätzliches Eintragsaggregat geeignete Zuschlagsstoffe zugeführt werden können. In der darauffolgenden Homogenisierungszone 40 ist ein weiteres Stopfwerk 42 vorgesehen, an welches sich eine Austragszone 44 des Buss-Ko-Kneters 22 anschließt.

Zugeführt durch den Trichter 20, kann dann das PET-Aufgabegut nacheinander die Zonen 34, 36, 40 und 44 durchlaufen, bis es mittels einer Austragsschnecke 46 zur unmittelbaren Weiterverarbeitung durch Extrudieren ausgetragen wird. Eine schematisch angedeutete Sockeleinheit 48 trägt den im dargestellten Ausführungsbeispiel horizontal angeordneten Kneter 22.

Die Knetereinheit 22 ist mittels eines Thermoöls auf eine Temperatur von etwa 280 bis 300°C geheizt, wobei zugehörige (nicht gezeigte) Pumpen elektronisch gesteuert und vorteilhaft über Magnetkupplungen mit zugehörigen Antriebseinheiten verbunden sind. Insbesondere ist auch die Schnecke 24 von innen auf diese Weise ölbeheizt.

Wesentlich für die Behandlung der gemahlenen PET-Flocken ist die Möglichkeit, daß Restfeuchtigkeit -- selbst vorgetrocknete PET-Flocken besitzen noch eine Restfeuchte zwischen etwa 0,5 und etwa 1 Gew.-% Wasseranteil -- kontrolliert während des Misch- bzw. Knetvorganges im Buss-Ko-Kneter kontinuierlich entweichen kann. Genauer gesagt wird durch die Dreh- und Pendelbewegung der Schnecke 24 das Aufgabegut in der Einzugszone 34 erhitzt und so gegen den Stauring 32 gepreßt, daß die erste Feuchte im Aufgabegut verdampft und teils über den Zuführtrichter 20 gegen die Fliessrichtung der heissen Masse oder aber am 1. Stopfwerk in Fliessrichtung der heissen Masse ohne eine sonst übliche Vakuumpumpe entweichen kann. Auf dem Weg des zähflüssigen Materials durch die Zone 34, 36, 40 und 44 hin zur Austragsschnecke wirkt ein weiteres Stopfwerk 42 auch als 2. Entgasung. Dort treten infolge einer Massetemperatur von über 270° C letzte Restfeuchte und aufgenommene Feuchte aus den Zuschlagstoffen aus. Völlig drucklos und entspannt wird die zähflüssige heisse Masse der Austragsschnecke 46 übergeben, wo über eine weitere 3. Entgasung mit einer üblichen Vakuumpumpe letzte störende Feuchte abgesaugt wird. Gerade das Wechselspiel von schrittweiser Feuchtigkeitsentnahme und Zugabe von Zuschlagsstoffen (Kristallisationskerne) und die fast offene Homogenisierung im Buss-Kneter ist neu. Auf diese Weise wird dann wirksam vermieden, daß diese Restfeuchte durch Reaktionen der thermischen Hydrolyse mit der Kunststoffmasse reagiert, deren Polymerketten zerstört und so den Werkstoff völlig unbrauchbar macht.

Darüber hinaus können über das erste Stopfwerk Zuschlagstoffe zugeführt werden, die sowohl zur mechanischen Festigkeitserhöhung des zu erzeugenden Endproduktes, als auch als Farbstoffe oder als Kristallisationsbeschleuniger wirken können. Als Zuschlagstoffe kommen beispielsweise Glasfasern, Glimmer, Kreide, Bariumsulfat, Glaskugeln, andere technische Fasern wie Aramid- oder Kohlefasern, Farbpigmente oder übliche Flammschutzmittel in Betracht. Diese werden insbesondere nach Zugeben durch das erste Stopfwerk 38 in der eigentlichen Mischzone 36 mit dem durch den Stauring 32 hindurchgeförderten Gemisch vermengt und dann in der nachfolgenden Homogenisierungszone 40 homogenisiert. Das hier angeordnete zweite Stopfwerk 42 ermöglicht, daß letzte Gase, insbesondere verbleibende Restfeuchtigkeit, aus dem mittlerweile zähflüssigen Material im Kneter 22 austreten kann; insoweit wirkt auch das zweite Stopfwerk 42 als Entgasungsöffnung. An dieser Stelle in der Anlage weist das zähflüssige PET-Material üblicherweise eine Temperatur oberhalb von 270°C auf.

Die zähflüssige Masse wird dann mittels der Austragschnecke 42, in der Fig. 1 abwärts gezeigt, waagerecht ausgetragen, wobei die Schnecke 46 durch einen aufsitzenden, schematisch gezeigten Antriebsmotor 50 zu einer gleichmäßigen Förderbewegung angetrieben wird, um nachgeschaltete Extrusionswerkzeuge zu beschicken.

Genauer gesagt ist der Austragsschnecke 46 ein Siebwechsler (z.B. Gneuss-Siebwechsler) nachgeschaltet, mit welchem etwaige, verbleibende verunreinigende Körper aus der Masse abgefiltert werden können. Ein derartiger Siebwechsler eignet sich insbesondere auch für Rezepturen, denen keine -- oder nur pulverförmige -- Zuschlagstoffe beigemengt werden, so daß etwa an dieser Stelle auch die die Homogenität des Endmaterials störenden Stoffe und Körper wie Holz, Papier, Sandkörnchen, thermoplastische Verunreinigungen wie Teflon, ETFE, PFA, aus der Schmelze gefiltert werden.

Zum möglichst exakten Steuern und Dosieren des nachfolgenden Extrudiervorganges ist eine gesonderte Schmelzpumpe 54 nachgeschaltet. An dieser sitzt dann, wie in der Fig. 1 schematisch gezeigt, ein Extrudierwerkzeug 56, um -- im vorliegenden Fall -- das Rohr im gewünschten Durchmesser aus der zufließenden Masse herauszuformen. Vorteilhaft ist dieses Extrudierwerkzeug zudem bereits an die beabsichtigten Endmaße (den beabsichtigten Durchmesser) des Rohres annähernd angepaßt, so daß beim nachfolgenden Ausformen des Rohres durch Stützluft von innen praktisch keine oder nur noch sehr geringe Verformungen der extrudierten Masse erfolgen müssen; da Versuche gezeigt haben, daß PET bei mechanischer Verformung einen sehr starken Memory-Effekt zeigt, kann auf diese Weise eine außerordentliche Stabilität und Zähigkeit des Endproduktes, selbst bei nachfolgender, erneuter Erwärmung, z.B. als warmes Kaminrohr, erreicht werden.

Ferner ist es wesentlich, das extrudierte Rohr entlang der nachfolgenden Bearbeitung in die beabsichtigte Endform nur langsam abzukühlen: Es wird durch das vorbeschriebene Kneten in der Anlage erreicht, daß das PET-Material in für die vorliegende Erfindung günstiger kristalliner Form vorliegt, was zudem durch Zugabe geeigneter Kristallisationskerne als Zuschlagsstoffe weiter gefördert werden kann. Damit dann das aus der Anlage heraustretende Material nicht durch schnelles Abkühlen wieder in den hier unerwünschten amorphen Gefügezustand zurückfällt, wurden die nachfolgend im Zusammenhang mit der Fig. 2 zu schildernden Maßnahmen getroffen, um während des Ausformens der Rohre für die beabsichtigte, langsame Abkühlung zu sorgen.

Wie in der Fig. 2 gezeigt, sorgt die Schmelzpumpe 54 durch ein gesteuertes Herausdrücken der gekneteten PET-Masse durch das Extrudierwerkzeug 56 für einen Formling mit bereits annähernd dem gewünschten, endgültigen Rohrdurchmesser. Ein entsprechendes Rohrende wird dann mittels eines Schleppstopfens 58 eines Korrugators 60 (d.h. einer mittels parallel zueinanderlaufender, in der Fig. 2 auseinandergezogen dargestellter Ketten 62 realisierter Vorrichtung zur Rohrherstellung, (beispielsweise hergestellt von der Firma Drossbach, Rain am Lech) erfaßt und in Pfeilrichtung 64 in Fig. 2 geführt. Gleichzeitig wird, wie durch das Pfeilpaar 66 angedeutet, von innerhalb des Korrugators 60 ein Überdruck erzeugt, der die noch weichen Rohrwände jeweils radial nach außen drückt (die sog. Stützluft). Die Lamellen des Schleppstopfen sind aus temperaturbeständigem Viton Elastomer und sorgen für den Aufbau der Stützluft aus einem Kompressor, damit sich die Rohrwandung an den Korrugator anlegt und aus dem Korrugator transportiert wird. Der Schleppstopfen ist selbst beheizt, bevorzugt auf etwa 130°C.

Während es jedoch bei der herkömmlichen, bekannten Herstellung von Kunststoffrohren üblich ist, ein beispielsweise bekanntermaßen aus PP extrudiertes Rohr über Vakuumkalikrierung schnell mit kaltem Wasser außen zu kühlen, wird für das vorliegende Verfahren kontinuierlich dem Werkzeug Abstrahlungswärme aus dem Extrudat (Rohr) zugeführt, und es wird dadurch erreicht, den Temperaturabfall während des Durchlaufes durch den Korrugator 60 zu verringern. So ist typischerweise ein extrudiertes PET-Kaminrohr, welches bei einer Materialtemperatur von etwa 280°C in den Korrugator eintritt, am austrittsseitigen Ende immer noch etwa 180°C warm, wobei eine typische Vorschubgeschwindigkeit bei etwa 1 Meter/min liegt. Außerdem kann nach neuester Technologie zusätzlich zur Stützluft aussen über feinste Schlitze im Korrugatorwerkzeug Vakuum angelegt werden, was eine noch bessere Ausforschung und schnellere Abzugsgeschwingkeiten zuläßt.

Um ein langsame Erkalten des so gebildeten Rohres weiter zu unterstützen, ist dem Korrugator 60 eine wärmeisolierte, im Durchmesser verstellbare bzw. aufklappbare Tunneleinheit 68 nachgeschaltet, die das Abkühlen des Rohres weiter verzögert; typischerweise findet innerhalb einer 3 Meter langen Tunneleinheit ein Abkühlen des Rohres von etwa 180°C am Austrittsende des Korrugators auf etwa 100 bis 80° am Ende des Tunnels 68 statt. Daraufhin wird dann das Rohr an der Luft nochmals weiter auf etwa 75 bis 70° abgekühlt. Eine in der Fig. 2 am Ende der Tunneleinheit 68 schematisch gezeigte Abzugseinheit 70 in Form eines Raupenabzugs (gezeigt ist die Vorderansicht) ermöglicht das kontrollierte Herausführen des abgekühlten Rohres aus der Tunneleinheit 68. Eine derartige Abzieheinheit wird jedoch insbesondere dann entbehrlich, wenn etwa die Austragungs-, Extrusions-, Formungs- und Abkühlaggregate, nämlich die Einheiten 46, 56, 60 und 68, in einer vertikalen Fallrichtung übereinander angeordnet werden: Auf diese Weise ist für die beschriebene Ausführungsform ein etwa 15 bis 20 Meter hohes Gestell erforderlich, welches dann auch die Beschickungs- und Kneteinrichtung trägt; gerade ein gleichmäßiges und einfaches Herausführen des Rohres aus der Anlage scheint jedoch durch diese Anordnung kraft der angreifenden Gravitationswirkung in besonders einfacher Weise gewährleistet und sollte möglicherweise den zusätzlichen konstruktiven Aufwand rechtfertigen.

Auch ist es möglich, zur Verbesserung des Rohrtransports in den Rohrmantel eine umlaufende Nut oder Kerbe einzuformen, die etwa an der Stoßstelle einzelner Backen der Ketten 62 im Korrugator angeordnet sein kann, was den vertikalen Aufbau überflüssig macht.

Vorteilhaft wird der Korrugator zum Erhalten der beabsichtigten, hohen Verarbeitungstemperaturen zumindest solange extern beheizt, etwa durch eine geeignet eingerichtete Thermoöl-Heizeinrichtung, bis die von dem Werkstück selbst abgegebene Wärme für eine hinreichende Beheizung sorgt. So ist insbesondere auch in der nachgeschalteten Tunneleinheit 68 üblicherweise keine zusätzliche Beheizung notwendig, da diese durch die Eigenwärme des Werkstückes auf einer hinreichend hohen Temperatur gehalten wird und das beabsichtigte, langsame Abkühlen mit dem entsprechenden niedrigen Temperaturgradienten gestattet.

Gängige Durchmesser der hergestellten Kaminrohre sind 63, 75, 90, 110, 125, 140, 180, 200, 250 und 315 mm, die dann auf das Endprodukt abgelängt werden. Die üblichen Längen sind 150, 250, 500, 1000, 2000 und 5000 mm, wobei weiter bevorzugt eine Verbindungsmuffe (Steckmuffe) bereits während des Rohrformungsvorganges ausgebildet werden kann (durch die wiederum im Bereich einer solchen Muffe verstärkte Gefahr des Memory - Effektes ist es hier insbesondere vorteilhaft, geeignete, versteifende Fasern beizumengen.

Je nach beabsichtigtem Einsatz hat es sich als günstig erwiesen, der verarbeiteten Menge an PET zwischen etwa 5 und etwa 60 % Zuschlagstoffe per Gewicht beizumengen; generell seien übliche, mineralische Zuschlagstoffe wie Kreide, Glimmer, Talkum, Bariumsulfat usw. genannt. Dazu sind Fasern wie Glas, Kohle, Aramid, Naturfasern, Graphit, Molybdänsulfid, Teflon, PVDF (erhöht den Flammschutz und die UV-Beständigkeit) usw. sowie Glaskugeln, Hohlglaskugeln oder generell Flammschutzmittel als Zuschlagstoffe geeignet. Insbesondere Farbstoffe wie Titandioxid, Eisenoxid o.ä. fördern die Kristallitbildung.

Das Endprodukt, ein sehr gut für den vorgesehenen Einsatz etwa in einem Naßkamin geeignete PET-Kaminrohr, zeichnet sich durch die herbeigeführte, kristalline Struktur des Materials durch herausragende Materialeigenschaften aus; einen Überblick gibt die nachfolgende Tabelle, die das PET-Kaminrohr (im dargestellten Ausführungsbeispiel mit 15 % Glasfaseranteil) einem konventionellen PVDF-Kunststoff-Kaminrohr gegenüberstellt:

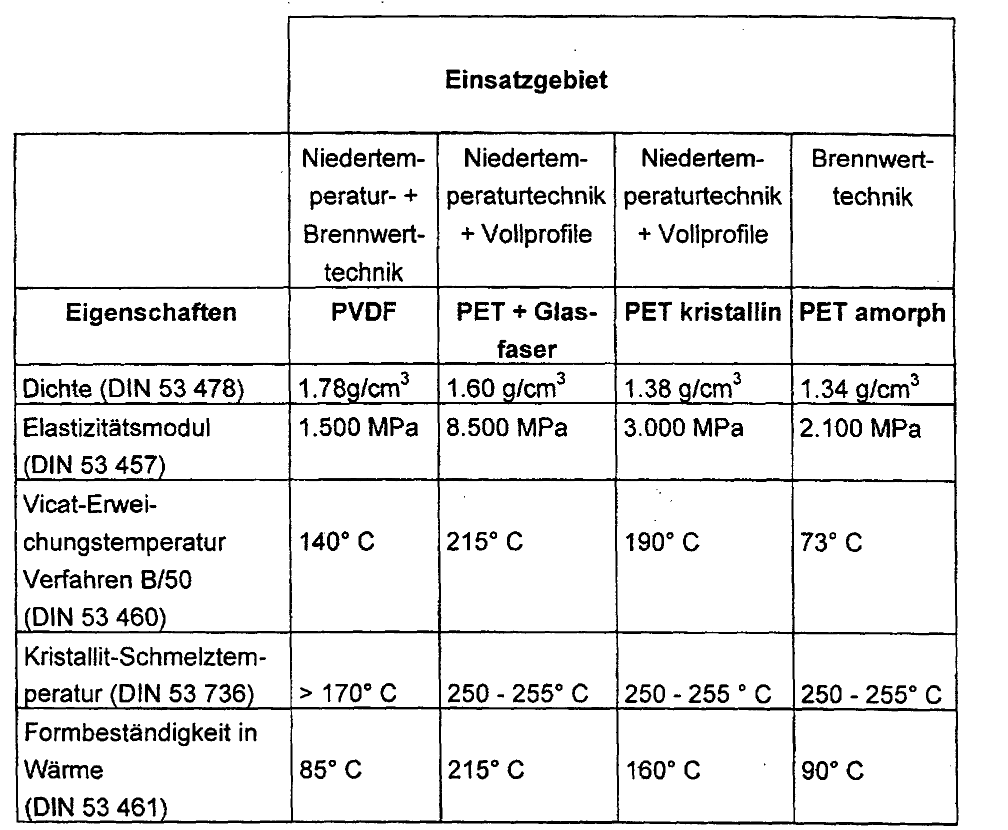

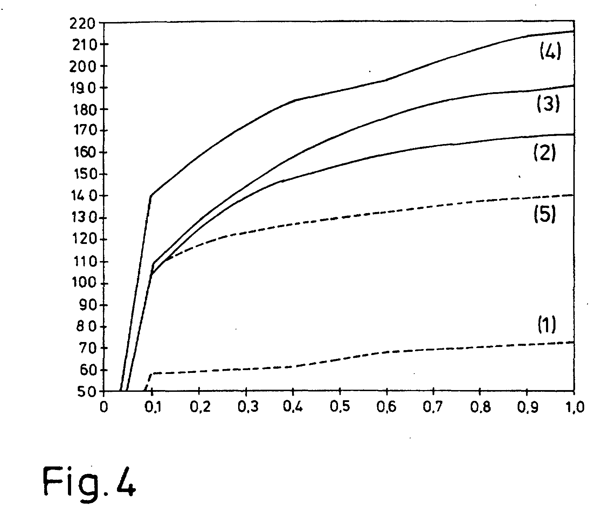

Es zeigt sich, daß das verwendete Material herausragende mechanische Eigenschaften besitzt, die es für den vorgesehenen Verwendungszweck in außerordentlich günstiger Weise geeignet macht; vgl. auch die Fig. 4, die die Meßkurven einer Vicat B50-Messung mit den erreichten Ergebnissen einander gegenüberstellt und die herausragenden Eigenschaften des kristallinen PET verdeutlicht. Im einzelnen zeigt Kurve (1) die sehr niedrigen Ergebnisse für amorphes PET; kristallines PET ist als doppelte Kurve -- ungefärbt sowie mit einer Einfärbung versehen -- in Kurve (2) dargestellt, PET mit einem kristallisationsfördernden Nukleierungsmittel sowie 10 Gew.-% Glasfaseranteil in Kurve (3), sowie dieses Material mit einem Glasfaseranteil von 30 Gew.-% in Kurve (4).

Zum Vergleich ist eine Messung mit PVDF in Kurve (5) dargestellt.

Während insbesondere dünnwandige Kaminrohre, im dargestellten Beispiel durch zusätzliche Druckluftunterstützung (Stützluft), aus dem, kristallinen PET-Material hergestellt werden, ist es möglich, alternativ auch etwa Vollstäbe, Profile od.dgl. Elemente herzustellen.

Während die beschriebene Anlage bei einer Vorschubgeschwindigkeit des extrudierten Rohres von etwa 1/min einen Materialdurchsatz von ungefähr 60 kg pro Stunde aufweist (entspricht etwa 12 Rohren ä 5 Meter Länge, bei 75 mm Rohrdurchmesser), steht es selbstverständlich im Belieben des Fachmannes, geeignete andere Parameter bzw. Durchsätze einzustellen.

Insbesondere liegt es auch im Rahmen der Erfindung, das PET ohne jegliche Zuschlagstoffe zu verwenden; auch hier wird allein durch das langsame Abkühlen der gewünschte kristalline Zustand des Materials erreicht.

Über längere Korrugatoren und längere Warmhaltetunnel (68) können die Produktionsgeschwindigkeiten durch Erhöhen des Ausstoßes (größerer Kneter) fast beliebig erhöht werden.

Unter Bezug auf die Fig. 3 wird nunmehr noch einmal das Herstellungsverfahren mit den wesentlichen Herstellungsschritten beschrieben. Während in Schritt S1 das PET-Material zerkleinert und in gewünschter Weise feinzermahlen wird, wird dieses dann geeignet von Metallen oder anderen Störkörpern befreite Aufgabegut in Schritt S2 im Buss-Ko-Kneter in der erfindungsgemäßen Weise so homogenisiert, daß die verbleibende Restfeuchtigkeit in Gasform entweichen kann; in Schritt S3 werden in diesem Knet- bzw. Mischprozeß Füllstoffe in geeigneter Weise genau zugewogen und Restfeuchte und Feuchte aus den Zuschlagstoffen werden durch die fast offene Homogenisierung zur Verhinderung von thermischer Hydrolyse abgeführt.

In Schritt S4 wird dann das Gemisch ausgetragen, über eine Vakuumpumpe entgast und unmittelbar der Extrusion zugeführt, insbesondere auch ohne zwischenzeitlich etwa das Material zu granulieren. In Schritt S5 erfolgt dann das Ausformen des Rohres in die gewünschte Form, woraufhin in S6 erfindungsgemäß langsam abgekühlt wird, so daß die kristalline Struktur des Werkstoffes entstehen kann.

Am Ende steht dann das gewünschte Rohr zum Ablängen bzw. Weiterverwenden bereit.

Während die vorbeschriebene technische Lehre dieser Erfindung speziell auf das Herstellen von Kunststoffrohren, und insbesondere von Kaminrohren aus dem kristallinen PET-Material abgestellt hat und auf diese Weise erfindungsgemäß beträchtliche, auch prozeßbezogene Vorteile realisiert werden, ist es alternativ möglich und vom Erfindungsgedanken mitumfaßt, auf die beschriebene Weise nicht nur Vollstäbe oder Profile herzustellen, sondern auch ein weiterverarbeitbares, kristallines PET-Granulat zu erzeugen. Zu diesem Zweck wird als Extrusionswerkzeug eine entsprechende Granuliereinrichtung vorgesehen, die dann die aus dem Kneter ausgetragene PET-Masse in Granulate umsetzt. Auch ist es nötig, daß PET-Granulate vor einer Verpackung vorgetrocknet werden, um nicht durch Feuchtigkeit zerstört zu werden und verarbeitbar zu bleiben. Für einen solchen Regranulationsprozeß sollte das Material möglichst heiß auf den Granulierextruder gebracht werden, damit die Energiebilanz günstig ist. Etwa kann eine Vorwärmung bestehenden Granulats über einen Henschel-Fluidmischer bei 140°C geschehen, dies liegt fast 100° höher als bei üblichen Massenkunststoffen wie PE, PP usw. Vorteilhaft ist es zudem mittels eines Wärmetauschers möglich, erzeugtes, warmes Material abzukühlen und kaltes Rohmaterial aufzuwärmen, wobei durch einen geeigneten Wärmetauscher etwa innen warme Granulate nach unten abgleiten und außen die Granulatflakes vorgewärmt werden. Auf diese Weise wird die Ausstoßleistung erhöht und der Energieverbrauch vermindert; darüber hinaus werden gemahlene, sog. PET-Flakes schonend aufgeschmolzen.

Durch Granulierung im Heißabschlag und kurzzeitiges Eintauchen in Kühlwasser wird ein schlagartiges Abkühlen der einen Durchmesser von ca. 5 mm aufweisenden Granulate erreicht. Restwasser wird über ein schräges Rüttelsieb abgeführt. Die im Granulat gespeicherte Wärme trocknet die Außenhaut des Granulats ab, und es kommt insbesondere während des Transports auf dem Rüttelsieb und später während des Transports zum Nachtrockner oder Wärmetauscher im einzelnen Granulatkorn zur Umwandlung vom amorphen in das kristalline Gefüge. Vorteilhaft verhindern bereits kleinste Mengen von Farbpigmenten oder Glimmer ein Verkleben der ca. 200°C heißen Granulate.

Insbesondere wird sich das auf diese Weise hergestellte Granulat als nützlich erweisen zum -- ansonsten bekannten -- Extrusionsblasen von speziellen Kunststofformstücken, wie sie beispielsweise als T-Stücke, Bögen, Flansche und dergleichen Stücke Verwendung finden können.

Als wesentliches Argument für das Herstellen von Kaminrohren mit kristallinem PET entsprechend dem Anspruch 2 steht, neben den herausragenden, mechanischen und prozeßtechnischen Eigenschaften, die überragende Wirtschaftlichkeit. So fallen etwa PET-Stücke aus Getränkeflaschenabfällen grob gemahlen in sehr großen Mengen und relativ preisgünstig an, da bislang ein Weg zur sinnvollen Weiterverarbeitung nicht existiert. Da zudem die eingangs beschriebene Feuchtigkeitsproblematik den Umgang mit PET im Vergleich zu herkömmlichen Spritz- und Extrudierverfahren und darin verwendeten Kunststoffen außerordentlich kompliziert macht, gab es bisher keinerlei Veranlassung, sich des Werkstoffes PET, insbesondere für die Verwendung in Kaminrohren, anzunehmen.

Gleichwohl ist ein erfindungsgemäß unter Beachtung der notwendigen Schritten hergestelltes Rohr verglichen mit üblichen Kunststoff-Kaminrohren nicht nur mechanisch überlegen; darüber hinaus ergeben erste Kalkulationen, daß Kostenreduktionen bis zu 80 % möglich sind. Ein Kostenvorteil ergibt sich sogar im direkten Vergleich mit Kaminrohren aus Edelstahl, die ein Substitutionsprodukt darstellen; es scheint durch die mittlerweile erreichten, dünnen Wandstärken des Stahls eine kritische Untergrenze erreicht, und auch in diesem Vergleich scheint der wirtschaftliche und technische Vorteil des PET immens.

Im Gegensatz zu üblichen Kunststoffen ist PET zudem sehr gut verklebbar. Dies eröffnet neue konstruktive billige Möglichkeiten.

Gemäß einer bevorzugten Ansführung wird dem zu verarbeitenden PET ein Gleitmittel als Additiv zugesetzt. Dieses Gleitmittel weist die vorteilhafte Eigenschaft auf, daß es -- beispielsweise bei der Verarbeitung mittels eines Spritzgießverfahrens -- das Fließverhalten der langkettigen PET-Polymere durch seine Benetzungswirkung deutlich verbessert, indem es die Reibung zwischen den Polymerketten einerseits und die Reibung zwischen Polymer und Formdüsen andererseits vermindert.

Geeignet wird ein derartiges Additiv als Gleitmittel Paraffine, Stearine bzw. Wachse eingesetzt. Geeignet finden etwa neben den Fettsäureestern des Trimethylolpropans oder Pentaerythrits und den Montansäureestern auch seifenhaltige Montanester Verwendung. Diese eignen sich insbesondere gut für glasfaserverstärkte Produkte. So ist Montansäuretriglyzerid besonders migrationsbeständig, und insbesondere auch Natriummontanat zeigt über seine Eigenschaft als geeignetes Gleitmittel hinaus auch nukleierende Wirkung, es dient als Keimbildner zur Förderung der Kristallisation.

Derartige vorteilhafte Additive können geeignet etwa zwischen 0,1 und 3 Gew.-% dem flüssigen PET-Material zugesetzt werden; besonders bevorzugt ist ein Zufügen mit einem Anteil zwischen 0,2 und 0,5 Gew.-%.

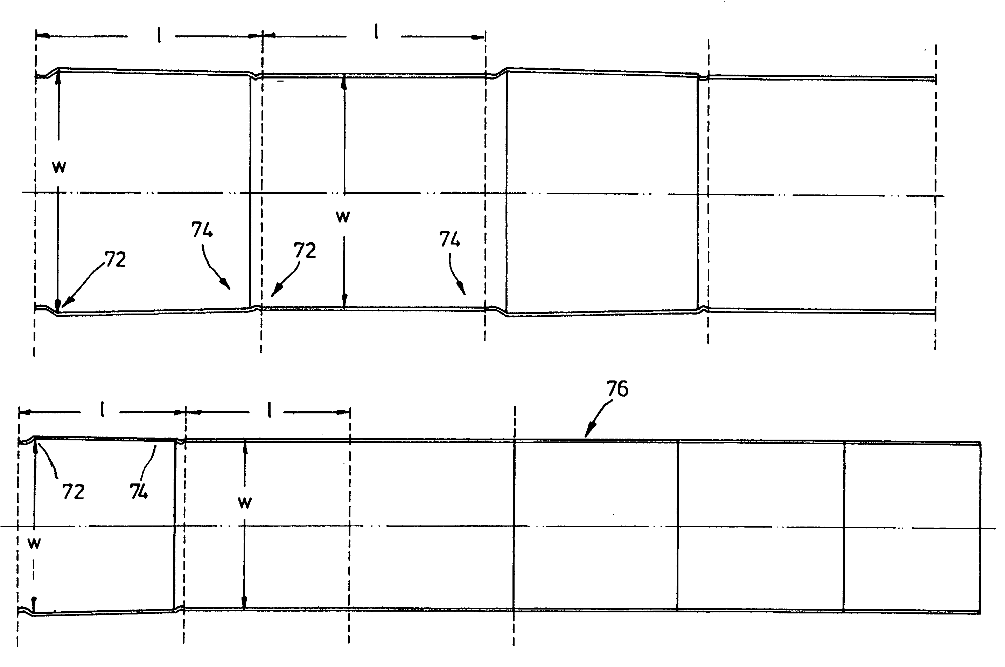

Aus den Fig. 5 bis 10 sind neue Rohrvarianten ersichtlich, die bevorzugt unter Verwendung des erfindungsgemäß hergestellten PET geformt sind. So besteht die Ausbildung gemäß Fig. 5 fortlaufend aus einer glatten Muffe 72 und einem Eintauchstück 74. In einem Beispiel für eine Nennweite w von 110 mm besitzt das Rohr pro Korrugatorsegment der Länge 1 = 106 mm eine Muffe und anschließend ein Eintauchstück. Ein zur Herstellung verwendeter Korrugator besitzt 36 Segmente, daraus resultieren 2 Stangen ä 1,90 m - 10 cm Eintauchstück = 180 cm Baulänge. Die Länge unter 2 m hat zudem Transportvorteile, da die Post und UPS Bauteile unter 2 m extrem preisgünstig transportieren.

Damit wird es möglich, dieses Rohr jeweils im Abstand von 10 oder 20 cm abzuschneiden und wahlweise mit einer Muffe oder einem Eintauchstück enden zu lassen. Dies ist wichtig für den Einsatz einer Revisionsöffnung, die im Rauchrohrbereich oder in der Steigleitung als Revisionsöffnung unter einem Dach eingesetzt werden muß.

Der Innendurchmesser w der Muffe ist gleichzeitig so gewählt, daß in allen Nennweiten auch die entsprechenden flexiblen Rohre passend eingebaut werden können. Mit Epoxiharz, Polyurethan, Cyanacrylat oder Polycholoroprenklebstoffen können harte oder weiche dichte Klebverbindungen erreicht werden. Im Kaminbau braucht man die dichten Verbindungen für den Überdruckbetrieb (Brennwerttechnik). Die gesteckten, nicht dichten Verbindungen können für atmosphärische Gaskessel im Unterdruck eingesetzt werden.

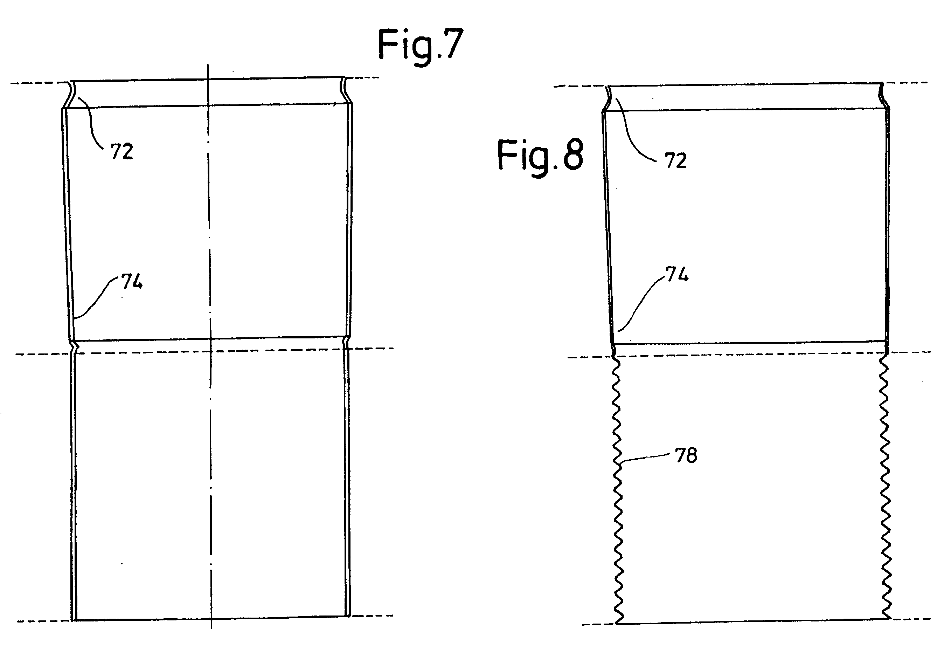

Wie in der Fig. 5 als stangenförmige Anordnung eine beliebig in der beschriebenen Weise trennbare Anordnung von Muffensegmenten zeigt (die Fig. 7 verdeutlicht insoweit ein Einzelsegment) zeigen die Fig. 6 und 8 vorteilhafte Weiterbildungen. So enthält das Ausführungsbeispiel der Fig. 6 lediglich an einem Ende ein Muffensegment und wird dann in einem langgestreckten Bereich weitergeführt. Demgegenüber ist in der Fig. 8, an den Eintauchabschnitt 74 ansetzend, ein korrugierter Bereich 78 gezeigt.

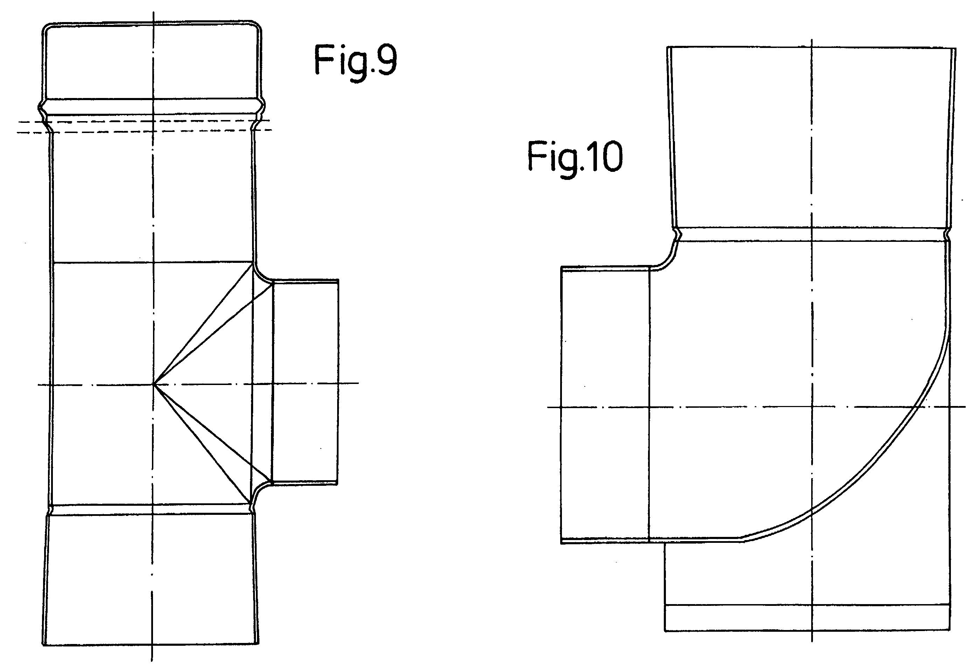

Ein in der Fig. 9 gezeigtes, zugehöriges T-Stück wird vorzugsweise in Blastechnik hergestellt, ist dadurch sehr preiswert, und die Innenrundungen ermöglichen ein günstiges Ablaufen des Kondensats. Schließlich zeigt die Fig. 10 ein geeignetes Winkelstück.

Auf die vorteilhafte Weise sind somit Rohre herstellbar, die bei äußerst geringem Produktionsaufwand und optimaler Flexibilität im Einsatz und in der Anpassung an vorgegebene Abmessungen am Einsatzort die Vorteile des kristallinen PET optimal umsetzen.

## Patentansprüche

1. Verfahren zum Herstellen von bevorzugt zylindrischen, rohrförmigen Kunststoffkörpern, insbesondere von Kaminrohren, **gekennzeichnet durch** die Schritte:
- Beschicken einer Misch- bzw. Knetvorrichtung (22) mit zerkleinertem PET-Ausgangsmaterial;
- Kneten des zerkleinerten PET-Ausgangsmaterials unter Wärmezufuhr oder Wärmeentwicklung, so, daß ein homogenes, zähflüssiges Gemisch entsteht und im Gemisch vorhandene Feuchtigkeit **durch** mindestens einen Auslaß der Misch- und Knetvorrichtung (22) entweichen kann und
- Austragen des homogenen, zähflüssigen Gemisches und Formen des Kunststoffkörpers aus dem Gemisch.

2. Verfahren nach Anspruch 1, **gekennzeichnet durch** den Schritt:
- Abkühlen des geformten Kunststoffkörpers mit einem Temperaturgradienten, der so eingestellt ist, daß eine kristalline Form des zu dem Kunststoffkörper geformten Gemisches entsteht.

3. Verfahren nach Anspruch 1 oder 2, **dadurch gekennzeichnet, daß** der Schritt des Beschickens das Beschicken mit PET-Ausgangsmaterial aufweist, welches durch Zerkleinern aus PET-Getränkeflaschen od.dgl. recyklierten Materialien gewonnen wurde.

4. Verfahren nach einem der Ansprüche 1 bis 3, **gekennzeichnet durch** den Schritt des Zugebens von Füllstoffen, die mechanisch verstärkend, kristallisationsfördernd, UV-stabilisierend und/oder flammhemmend wirken.

5. Verfahren nach einem der Ansprüche 1 bis 4, **dadurch gekennzeichnet, daß** der Schritt des Knetens bei einer Temperatur des zerkleinerten Ausgangsmaterials erfolgt, die zwischen etwa 230 und etwa 320°C liegt.

6. Verfahren nach einem der Ansprüche 1 bis 5, **dadurch gekennzeichnet, daß** das Formen des Kunststoffkorpers durch einen Extrusionsvorgang und ein nachfolgendes Einbringen in einem Korrugator erfolgt, so daß ein Kunststoffrohr entsteht.

7. Verfahren nach einem der Ansprüche 2 bis 6, **dadurch gekennzeichnet, daß** das Abkühlen mit einem Temperaturgradienten erfolgt, der zwischen etwa-10°C/min und etwa -50°C/min, bevorzugt zwischen etwa -20 und etwa -40°C/min liegt, wobei eine Temperatur des ausgetragenen Gemisches zwischen etwa 250 und etwa 300°C liegt.

8. Verfahren nach einem der Ansprüche 1 bis 7, **gekennzeichnet durch** den Schritt des Ablängens des abgekühlten Kunststoffkörpers auf eine gewünschte Rohrlänge.

9. Verfahren nach einem der Ansprüche 1 bis 8, **dadurch gekennzeichnet, daß** der Schritt des Formens des Kunststoffkörpers das Anformen eines Muffenabschnitts an den Kunststoffkörper aufweist.

10. Vorrichtung zum Herstellen eines langgestreckten, rohrförmigen Kunststoffkörpers, zum Durchführen des Verfahrens nach einem der Ansprüche 1 bis 9, mit
einer Mischeinheit, die zum Mischen und Aufbereiten von Kunststoff-Ausgangsmaterial ausgebildet ist, und
einer nachgeschalteten Formeinheit, die zum Formen des Kunststoffkörpers aus dem aufbereiteten Kunststoffmaterial eingerichtet ist, **dadurch gekennzeichnet, daß** die Mischereinheit (22) eine sowohl drehend als auch in ihrer Axialrichtung pendelnd angetriebene, im Betrieb Mischgut erwärmende Misch-schnecke (24) aufweist, und
mindestens ein Auslass (20; 38; 42) so in einer Mischzone (34, 36, 44) der Mischeinheit vorgesehen ist, daß Feuchtigkeit des PET-Mischgutes in Gasform aus der Mischeinheit entweichen kann.

11. Vorrichtung nach Anspruch 10, **dadurch gekennzeichnet, daß** die Formeinheit (54, 56, 58, 60, 62, 68, 70) so ausgebildet ist, daß ein Abkühlen eines geformten PET-Kunststoffkörpers mit einer Geschwindigkeit erfolgen kann, die dessen kristalline Struktur bis zum gebrauchsfertigen Erkalten des PET-Kunststoffkörpers entstehen läßt.

12. Vorrichtung nach Anspruch 10 oder 11, **dadurch gekennzeichnet, daß** die Mischeinheit als Buss-Ko-Kneter (22) realisiert ist.

13. Vorrichtung nach einem der Ansprüche 10 bis 12, **dadurch gekennzeichnet, daß** die Mischeinheit ein Heizaggregat zum Beheizen der Mischschnecke (24) aufweist.

14. Vorrichtung nach einem der Ansprüche 10 bis 13, **dadurch gekennzeichnet, daß** die Formeinheit einen Korrugator (60, 62) aufweist; der so ausgebildet. ist, daß einem damit behandelten PET-Kunststoffkörper während eines Formvorgangs zusätzliche Wärme zugeführt werden kann.

15. Vorrichtung nach einem der Ansprüche 10 bis 14, **dadurch gekennzeichnet, daß** die Formeinheit eine Abkühleinrichtung (68) aufweist, die bevorzugt als wärmeisolierter Tunnel einer vorbestimmten Länge ausgebildet ist, durch welche der PET-Kunststoffkörper in vorbestimmter Zeit hindurchgeführt werden kann.

16. Verwendung eines Kunstscoffkörpers, der nach dem Verfahren nach einem der Ansprüche 1 bis 9 hergestellt ist, zum Herstellen von Kunststoffrohren, insbesondere Kaminrohren, sowie von Kunststoffstäben und Kunststoffprofilen für Anwendungen im Bau-, Elektro-, Frischwasser-, Abwasser- und industriellen Produktionsbereich.

17. Verfahren nach einem der Ansprüche 1 bis 9, **dadurch gekennzeichnet, daß** das PET-Ausgangsmaterial PET-Stücke aus zerkleinerten PET-Flaschen oder extrudierten, plattenförmigen PET-Körpern aufweist.

18. Verwendung eines Kunststoffkörpers, der nach dem Verfahren nach einem der Ansprüche 1 bis 9 hergestellt ist, zum Herstellen von Karosserieteilen, Felgen oder anderen Elementen im Fahrzeugbau.

19. Verwendung eines Kunststoffkörpers, der nach dem Verfahren nach einem der Ansprüche 1 bis 9 hergestellt ist, als Kaminrohr od.dgl. Abgasleitung, wobei als Kunststoffmaterial PET eingesetzt wird, das als Kaminrohr in kristalliner Form vorliegt und dem Kaminrohr eine Vicat-Erweichungstemperatur von mindestens 120°C, bevorzugt mindestens 130°C, verleiht.

20. Verwendung nach Anspruch 19, **dadurch gekennzeichnet, daß** das Kaminrohr einstückig, und insbesondere mittels eines Extrusionsverfahrens hergestellt ist.

21. Verwendung nach Anspruch 19 oder 20, **dadurch gekennzeichnet, daß** einends ein einstückig angeformter Muffenabschnitt vorgesehen ist.

22. Verwendung nach einem der Ansprüche 19 bis 21, **dadurch gekennzeichnet, daß** das Kaminrohr ohne Zwischenschaltung eines Granulatzustands hergestellt ist.

23. Verwendung nach einem der Ansprüche 19 bis 22, **dadurch gekennzeichnet, daß** dem PET-Kunststoffmaterial Füllstoffe zugesetzt sind, die aus der Gruppe bestehend aus Glasfasern, Glimmer, Kreide, Bariumsulfat, Glaskugeln, Glashohlkugeln, Aramidfasern, Kohlefasern, PVDF, Farbpigmenten oder Flammschutzmitteln ausgewählt sind.

24. Verwendung nach Anspruch 23, **dadurch gekennzeichnet, daß** die Füllstoffe dem PET-Kunststoffmaterial mit einem Anteil zwischen etwa 2 und etwa 60 Gew.-% zugesetzt worden sind.

## Claims

1. Method for the manufacture of preferably cylindrical, tubular plastic bodies, in particular flues, **characterised by** the steps of:
- charging a mixing or kneading apparatus (22) with comminuted PET starting material;
- kneading the comminuted PET starting material while supplying heat or generating heat, in such a way that a homogeneous, viscous mixture is produced and moisture present in the mixture can escape through at least one outlet of the mixing and kneading apparatus (22) and
- discharging the homogeneous, viscous mixture and shaping the plastic body from the mixture.

2. Method according to claim 1, **characterised by** the step of:
- cooling the shaped plastic body with a temperature gradient which is adjusted in such a way that a crystalline form of the mixture which has been shaped into the plastic body is produced.

3. Method according to claim 1 or 2, **characterised in that** the step of charging comprises charging with PET starting material which has been obtained by comminution from PET drinks bottles or the like recycled materials.

4. Method according to any of claims 1 to 3, **characterised by** the step of adding filler materials which have a mechanically strengthening, crystallisation-promoting, UV-stabilising and/or flame retardant effect.

5. Method according to any of claims 1 to 4, **characterised in that** the step of kneading takes place at a temperature of the comminuted starting material which is between approximately 230 and approximately 320°C.

6. Method according to any of claims 1 to 5, **characterised in that** shaping of the plastic body takes place by an extrusion process and subsequent introduction in a corrugator, so that a plastic pipe is produced.

7. Method according to any of claims 2 to 6, **characterised in that** cooling takes place with a temperature gradient which is between approximately 10°C/min and approximately -50°C/min, preferably between approximately -20 and approximately -40°C, wherein a temperature of the discharged mixture is between approximately 250 and approximately 300°C.

8. Method according to any of claims 1 to 7, **characterised by** the step of lengthening the cooled plastic body to a desired pipe length.

9. Method according to any of claims 1 to 8, **characterised in that** the step of shaping the plastic body comprises shaping a sleeve section on to the plastic body.

10. Apparatus for the manufacture of an elongate, tubular plastic body, for carrying out the method according to any of claims 1 to 9, with
a mixing unit which is designed for mixing and processing of plastic starting material, and
a subsequent shaping unit which is designed for shaping the plastic body from the processed plastic material,
**characterised in that** the mixer unit (22) comprises a mixing screw (24) which is driven so as both to rotate and to oscillate in its axial direction and which heats the material to be mixed during operation, and
at least one outlet (20; 38; 42) is provided in such a way in a mixing zone (34, 36, 44) of the mixing unit that moisture of the PET material to be mixed can escape from the mixing unit in gaseous form.

11. Apparatus according to claim 10, **characterised in that** the shaping unit (54, 56, 58, 60, 62, 68, 70) is designed in such a way that cooling of a shaped PET plastic body can take place at a rate which causes the crystalline structure thereof to be produced until the PET plastic body has cooled down ready for use.

12. Apparatus according to claim 10 or 11, **characterised in that** the mixing unit is designed as a Buss kneader (22).

13. Apparatus according to any of claims 10 to 12,
**characterised in that** the mixing unit comprises a heating assembly for heating the mixing screw (24).

14. Apparatus according to any of claims 10 to 13,
**characterised in that** the shaping unit comprises a corrugator (60, 62) which is designed in such a way that, during a shaping process, additional heat can be supplied to a PET plastic body treated therewith.

15. Apparatus according to any of claims 10 to 14,
**characterised in that** the shaping unit comprises a cooling device (68) which is preferably designed as a heat-insulated tunnel having a predetermined length, through which the PET plastic body can be passed within a predetermined time.

16. Use of a plastic body which is manufactured by the method according to any of claims 1 to 9, for the manufacture of plastic pipes, in particular flues, as well as of plastic rods and plastic profiles for applications in the building, electrical, fresh water, waste water and industrial production fields.

17. Method according to any of claims 1 to 9, **characterised in that** the PET starting material comprises PET pieces from comminuted PET bottles or extruded, plate-like PET bodies.

18. Use of a plastic body which is manufactured by the method according to any of claims 1 to 9, for the manufacture of vehicle body parts, wheel rims or other elements in vehicle construction.

19. Use of a plastic body which is manufactured by the method according to any of claims 1 to 9, as a flue or the like waste gas pipe, wherein PET which is in crystalline form as the flue and gives the flue a Vicat softening temperature of at least 120°C, preferably at least 130°C, is used as the plastic material.

20. Use according to claim 19, **characterised in that** the flue is manufactured in one piece, and in particular by an extrusion process.

21. Use according to claim 19 or 20, **characterised in that** at one end a sleeve section shaped on in one piece is provided.

22. Use according to any of claims 19 to 21, **characterised in that** the flue is manufactured without the interposition of a granular state.

23. Use according to any of claims 19 to 22, **characterised in that** filler materials which are selected from the group consisting of glass fibres, mica, chalk, barium sulphate, glass beads, hollow glass beads, aramide fibres, carbon fibres, PVDF, colouring pigments or flame-proofing agents are added to the PET plastic material.

24. Use according to claim 23, **characterised in that** the filler materials have been added to the PET plastic material in a proportion of between approximately 2 and approximately 60 wt.%.

## Revendications

1. Procédé de fabrication de corps en matière plastique, de préférence en forme de tube, cylindrique, en particulier de tube de cheminée, **caractérisé par** les étapes de :
- alimenter un dispositif (22) de mélange, respectivement de malaxage, avec comme matériau de départ du polyéthylène concassé ;
- malaxer le polyéthylène de départ concassé sous adduction de chaleur ou sous dégagement de chaleur, de sorte qu'un mélange homogène et visqueux soit produit et que l'humidité présente dans le mélange puisse se libérer à travers au moins une évacuation du dispositif (22) de mélange et de malaxage ; et
- évacuer le mélange homogène et visqueux et former le corps en matière plastique à partir du mélange.

2. Procédé selon la revendication 1, **caractérisé par** l'étape de :
- refroidir le corps en matière plastique formé avec un gradient de température réglé de telle sorte que se forme une structure cristalline du mélange formé pour le corps en matière plastique.

3. Procédé selon la revendication 1 ou 2, **caractérisé en ce que** l'étape d'alimentation présente l'alimentation avec du polyéthylène comme matériau de départ qui a été obtenu par concassage de matériau recyclé tel que le polyéthylène de bouteilles de boisson ou similaire.

4. Procédé selon l'une quelconque des revendications 1 à 3, **caractérisé par** l'étape de fourniture de matériaux de remplissage qui agissent comme renfort mécanique, qui favorisent la cristallisation, qui agissent comme stabilisateur aux U.V. et/ou qui agissent comme retardateurs de combustion.

5. Procédé selon l'une quelconque des revendications 1 à 4, **caractérisé en ce que** l'étape de malaxage se produit à une température de matériau de départ concassé qui se trouve entre environ 230°C et environ 320°C.

6. Procédé selon l'une quelconque des revendications 1 à 5, **caractérisé en ce que** la formation du corps en matière plastique se produit par une étape d'extrusion suivie par l'introduction dans un corrugateur de sorte qu'un tube en matière plastique se forme.

7. Procédé selon l'une quelconque des revendications 2 à 6, **caractérisé en ce que** le refroidissement se produit avec un gradient de température qui se trouve entre environ -10°C par minute en environ -50°C par minute, de préférence entre environ -20°C par minute et environ -40°C par minute, la température du mélange évacué se trouvant entre environ 250°C et environ 300°C.

8. Procédé selon l'une quelconque des revendications 1 à 7, **caractérisé par** l'étape de tronçonnage des corps en matière plastique refroidis à une longueur de tube souhaitée.

9. Procédé selon l'une quelconque des revendications 1 à 8, **caractérisé en ce que** l'étape de formation du corps en matière plastique comporte la formation d'un segment de manchon sur le corps en matière plastique.

10. Dispositif de fabrication d'un corps en matière plastique allongé, en forme de tube, pour effectuer le procédé selon l'une quelconque des revendications 1 à 9, avec :
- une unité de mélange formée pour mélanger et préparer la matière plastique servant de matériau de départ ; et
- une unité de formation placée en aval qui sert à former le corps en matière plastique à partir du matériau plastique préparé,
**caractérisé en ce que** l'unité de mélange (22) présente une vis sans fin (24) de mélange chauffant le mélange durant son fonctionnement, et pouvant être entraînée aussi bien de manière rotative que de manière oscillante dans la direction de son axe, et
- au moins une évacuation (20, 38, 42) est placée dans une zone de mélange (34, 36, 44) de l'unité de mélange, de sorte que l'humidité du mélange de polyéthylène puisse se libérer sous forme de gaz de l'unité de mélange.

11. Dispositif selon la revendication 10, **caractérisé en ce que** l'unité de formation (54, 56, 58; 60, 62, 68, 70) est formée de telle sorte que le refroidissement d'un corps en matière plastique en polyéthylène formé puisse se produire avec une vitesse qui permette à sa structure cristalline de se former jusqu'au refroidissement final permettant l'emploi du corps en matière plastique en polyéthylène.

12. Dispositif selon la revendication 10 ou 11, **caractérisé en ce que** l'unité de mélange est réalisée en tant que ko-malaxeur Buss (22).

13. Dispositif selon l'une quelconque des revendications 10 à 12, **caractérisé en ce que** l'unité de mélange présente un groupe chauffant pour chauffer la vis sans fin (24) de mélange.

14. Dispositif selon l'une quelconque des revendications 1 à 13, **caractérisé en ce que** l'unité de formation présente un corrugateur (60, 62) formé de telle sorte que de la chaleur supplémentaire peut être apportée au corps en matière plastique en polyéthylène en cours de fabrication pendant l'étape de formation.

15. Dispositif selon l'une quelconque des revendications 10 à 14, **caractérisé en ce que** l'unité de formation présente un mécanisme de refroidissement (68) qui est formé de préférence sous la forme d'un tunnel isolé thermiquement avec une longueur prédéterminée, à travers lequel le corps en matière plastique en polyéthylène peut être introduit à un moment prédéterminé.

16. Utilisation d'un corps en matière plastique, fabriqué selon le procédé selon l'une quelconque des revendications 1 à 9, pour la fabrication de tubes en plastique, en particulier de tubes de cheminée, ainsi que de tiges en matière plastique et de profilés en matière plastique pour l'application dans le domaine de la construction, de l'électricité, de l'eau d'appoint, des eaux usagées, et de la production industrielle.

17. Procédé selon l'une quelconque des revendications 1 à 9, **caractérisé en ce que** le matériau de départ en polyéthylène présente des morceaux en polyéthylène provenant de bouteilles en polyéthylène concassées ou extrudées ou de corps en polyéthylène de forme plate.

18. Utilisation d'un corps en matière plastique, fabriqué selon le procédé selon l'une des revendications 1 à 9, pour la fabrication de pièces de carrosserie, de jantes ou d'autres éléments dans la construction automobile.

19. Utilisation d'un corps en matière plastique, fabriqué selon le procédé selon l'une des revendications 1 à 9, comme tube de cheminée ou similaire ou de conduit de gaz d'échappement, fabriqué en matériau plastique polyéthylène, qui soit présent sous forme cristalline dans les tubes de cheminée et qui donne au tube de cheminée une température de ramollissement de Vicat d'au moins 120°C, de préférence d'au moins 130°C.

20. L'utilisation selon la revendication 19, **caractérisée en ce que** le tube de cheminée est fabriqué en un morceau, et en particulier à l'aide d'un procédé d'extrusion.

21. L'utilisation selon la revendication 19 ou 20, **caractérisée en ce qu'**un segment de manchon formé en un morceau est prévu à une extrémité.

22. L'utilisation selon l'une des revendications 19 à 21, **caractérisée en ce que** le tube de cheminée est fabriqué sans passage par un état grariulé.

23. L'utilisation selon l'une quelconque des revendications 19 à 22, **caractérisée en ce que** des matériaux de remplissage sont ajoutés au matériau en matière plastique en polyéthylène, les matériaux de remplissage étant choisis dans le groupe formé des fibres de verre, du mica, de la craie, de la barytine, des billes de verre, des billes creuses de verre, des fibres d'aramide, des fibres de carbone, du PVDF, des pigments de couleur ou des moyens de protection contre les flammes.

24. L'utilisation selon la revendication 23, **caractérisée en ce que** les matériaux de remplissage sont ajoutés aux matériaux plastiques en pblyéthylène dans une proportion entre environ 2 et environ 60 % en poids.
